(19) Europäisches Patentamt
European Patent Office
Office européen des brevets

(11) **EP 1 306 589 B1**

(12) **EUROPEAN PATENT SPECIFICATION**

(45) Date of publication and mention
of the grant of the patent:
**14.03.2007 Bulletin 2007/11**

(51) Int Cl.:
*F16J 15/08* *(2006.01)*

(21) Application number: **02024125.3**

(22) Date of filing: **29.10.2002**

(54) **High temperature seal**

Hochtemperaturdichtung

Joint d'étanchéité à haute température

(84) Designated Contracting States:
**DE FR GB**

(30) Priority: **29.10.2001 US 341102 P**
**24.10.2002 US 278867**

(43) Date of publication of application:
**02.05.2003 Bulletin 2003/18**

(73) Proprietor: **The Advanced Products Company
North Haven, CT 06473 (US)**

(72) Inventors:
• **More, Gregory, D.
Middletown,
Connecticut 06457 (US)**
• **Datta, Amitava
Rhode Island 02818 (US)**

(74) Representative: **Klunker . Schmitt-Nilson . Hirsch
Winzererstrasse 106
80797 München (DE)**

(56) References cited:
**US-A- 3 595 588**          **US-A- 5 630 593**
**US-B1- 6 227 546**

## Description

BACKGROUND OF THE INVENTION

(1) Field of the Invention

This invention relates to seals, and more particularly to metallic seals.

(2) Description of the Related Art

A variety of metallic seal configurations exist. Key metallic seals are commonly held under compression between two opposed flanges of the elements being sealed to each other. Such metallic seals may be used in a variety of industrial applications.

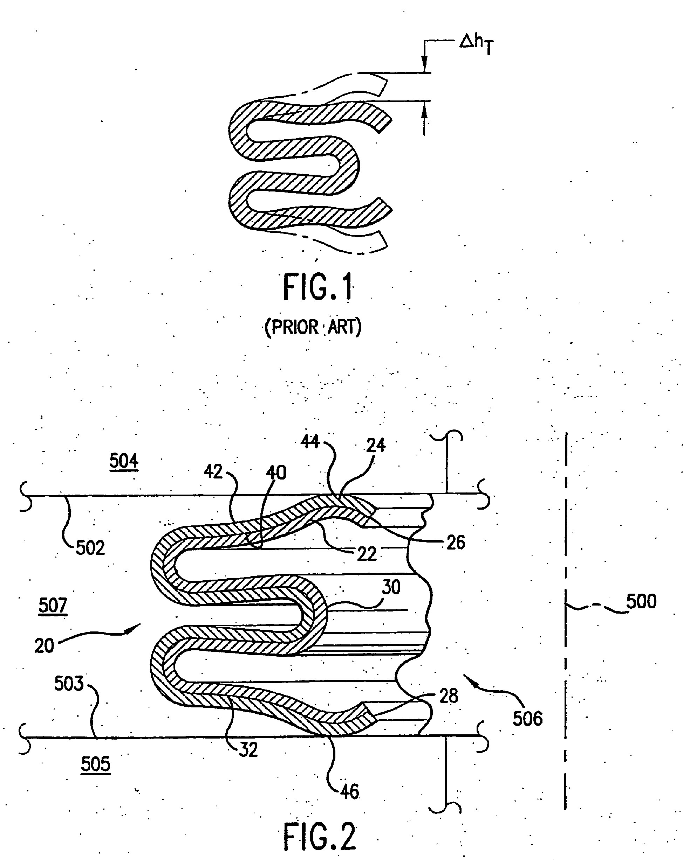

Examples of such metallic seals are of an annular configuration, having a convoluted radial section which permits the seal to act as a spring and maintain engagement with the flanges despite changes or variations in the flange separation. Certain such seals have an S-like section while others have a section similar to the Greek letter ε with diverging base and top portions. Other similar seals are formed with additional convolutions. One exemplary seal is sold by The Advanced Products Company, North Haven, Connecticut, USA, as the E-RING seal. Such seals are commonly formed as a monolithic piece of stainless steel or superalloy. Such seals are commonly formed from sheet stock into a shape which is effective to provide the seal with a desired range of compressibility from a relaxed condition. These seals are installed in applications in a compressed state as shown in FIG. 1. The total compression ($\Delta h_T$) consists of an elastic component ($\Delta h_{EL}$) and plastic component ($\Delta h_{PL}$) so that

$$\Delta h_T = \Delta h_{EL} + \Delta h_{PL} \quad .$$

With continued exposure at elevated temperatures, the plastic component $\Delta h_{PL}$ grows resulting from creep and the elastic component $\Delta h_{EL}$ decreases with time. As a result, the sealing load or the capability of the seal to follow the flange movement also diminishes with time resulting from the reduced $\Delta h_{EL}$. This phenomenon is called stress relaxation.

BRIEF SUMMARY OF THE INVENTION

Long-term applications of current metallic seals are generally limited to about 704°C (1300°F) because the current cold formable nickel-based superalloys such as INCONEL 718 (INCONEL, is a registered trademark; Special Metals Corporation, Huntington, West Virginia) and WASPALOY (trademark; Haynes International, Inc., Kokomo, Indiana), lose their strength at temperatures greater than 1300°F and stress relax. At temperatures beyond about 732°C (1350° F), static seals under compression stress relax and a fraction of the compression strain converts permanently to plastic strain with exposure time. As a result, the sealing force, which is proportional to the elastic strain, diminishes with time thereby increasing leakage. Additionally, the seal loses its capability to follow the mating flanges if they retract to a position of greater separation (lesser compression).

The phenomenon of stress relaxation under constant strain stems from creep at elevated temperatures where the gamma prime precipitates in 718 and WASPALOY (trademark) begin to coarsen, thereby increasing the rate of plastic (irreversible) flow. Hence, the temperature capability of static metallic seals could be enhanced if the gamma prime precipitate distribution is more stable well above 732°C (1350°F). Alternatively, the metallic alloys could be strengthened via solid solution hardening without any gamma prime precipitates or dispersion hardening where the particle dispersion imparting strength is stable at or above the application temperature.

There are other cast metallic alloys, such as MAR M247 (a cast superalloy used in manufacture of turbine engine blades available from Cannon-Muskegon Corporation, Muskegon, Michigan, as CM 247) which are used at ultra high temperatures (about 1700°C (2000°F)) for thick cross section cast and wrought components. These alloys can not readily be rolled into thinner gauges and cold formed into static seal shapes.

Recently developed mechanically alloyed strips such as MA 754 of Special Metals Corporation and PM 1000 of Plansee AG, Reutte, Austria, with superior high temperature strength characteristics are also very difficult to fabricate into seal shapes.

Some of the refractory alloy strips such as molybdenum base (e.g., titanium-zirconium-molybdenum (TZM)) and niobium base alloys, although cold formable, have poor oxidation resistance above 649°C (1200°F). Therefore, no current metallic alloy can readily be cold formed into seal and used at demanding elevated temperature applications requiring enhanced stress relaxation resistance.

Subject-matter of the invention is an annular seal having a longitudinal axis and forming, in use, a seal between an interior volume and an exterior volume when held under compression between opposed first and second faces of respective first and second flanges, comprising:

    (a) a metallic first layer made of an oxide dispersion strengthened alloy; and
    (b) a metallic second layer made of

    - a solid solution hardened alloy,
    - or a precipitation hardened nickel-base alloy,
    - or an oxide dispersion strengthened alloy.

Multiple-layer (ply) annular seals are known (US 6 227 546 B1, US 3 595 588 A, US 5 630 593 A). The layers of the known seals may be made of nickel-base alloys in general (US 6 227 546 B1) or precipitation hardened nickel-base alloys in general (US 3 595 588 A) or INCONEL (registered trademark; US 5 630 593 A) or WASPALOY (trademark; US 5 630 593 A). The use of oxide dispersion strengthened alloys is not taught.

Further subject-matter of the invention is a method of manufacturing a seal according to the invention, comprising:

cutting a first piece of a first material to a first length and first width; cutting a second piece of a second material to a second length and width; forming the first and second materials into first and second hoops; welding ends of each piece of material to each other; concentrically assembling the first and second hoops; and deforming the assembled hoops to create a convoluted cross-section..

Preferred embodiments of the invention are indicated in dependent claims.

BRIEF DESCRIPTION OF THE DRAWINGS

FIG. 1 is a radial sectional view of a metallic seal as known to those in the art.

FIG. 2 is a radial sectional view of a first metallic seal according to the present invention.

FIGS. 3A-C are radial sectional views of manufacturing stages of a second seal which, due to its single layer design, is not within the scope of the present invention.

FIGS. 4A-C, are radial sectional views of manufacturing stages of a third seal which, due to its single layer design, is not within the scope of the present invention.

FIGS. 5A-C are radial sectional views of manufacturing stages of a fourth seal

which, due to its single layer design, is not within the scope of the present invention.

Like reference numbers and designations in the various drawings indicate like elements.

DETAILED DESCRIPTION

Current metallic static seals are generally made of precipitation hardened nickel base superalloys such as Alloy 718 and WASPALO (trademark) whose long-term application temperatures are generally limited to 649-732°C (1200°-1350°F). In accordance with the present invention, ultra high temperature (UHT) metallic seals with long-term application temperatures above 732°C (1350°F) can be designed and fabricated using any of the following metallic alloys:

a. Gamma prime or any other precipitation hardened metallic alloys where precipitation temperature is above the application temperature. Such an alloy is RENE 41 ((UNS-N07041) Allvac Incorporated, Monroe, North Carolina), nominal composition percentages by weight 1.6 Al, 0.007 B, 0.05 C, 19.0 Co, 11.0 Cr, 3.0 Fe, 9.75 Mo, 3.15 Ti, remainder Ni plus impurities). Its precipitation hardening temperature is about 871°C (1600°F). Another example is Haynes (Registered trademark) new alloy HX (66% Ni, 17% Cr and balance Fe (by weight)) that could be precipitation hardened by forming very stable nitrides when heated in a nitrogen atmosphere for long-term applications above 732 °C (1350°F).

b. A solid solution hardened alloy such as Haynes (Registered trademark) 25 ((UNS No. R30605) nominal composition percentages by weight 20Cr, 15W, 10Ni, 1.5Mn, 0.10C, 3Fe max., 0.4Si max., 51 (balance) Co plus impurities), Haynes (Registered trademark) 188 ((UNS No. R30188) nominal composition percentages by weight 22Ni, 22Cr, 14W, 0.35Si, 0.10C, 0.03La, 3Fe max., 1.25Mn max, 39 (balance) Co plus impurities), or Haynes (Registered trademark) 230 ((UNS No. N06230) nominal composition percentages by weight 22Cr, 14W, 2Mo, 0.5Mn, 0.4Si, 0.3Al, 0.10C, 0.02La, 5Co max., 3Fe max., 0.015B, 57 (balance) Ni plus impurities) that do not contain any precipitates whose distribution becomes unstable above 732°C (1350°F).

c. A dispersion hardened alloy, which is hardened by very stable oxide particle dispersion whose distribution is stable well above 732°C (1350°F). Such metallic alloys, called Oxide Dispersion Strengthened alloys (ODS), are PM 1000 (Nominal chemical composition in weight %: 20 Cr, 3 Fe, 0.5 Ti, 0.3 Al, 0.6 $Y_2O_3$, remainder Ni), PM2000 (Nominal chemical composition in weigh%: 20 Cr, 5.5 Al, 0.5 Ti, 0.3 Al, 0.5 $Y_2O_3$, remainder Fe), PM 3000, MA 754 ((UNS N07754) Nominal Chemical Composition, wt.% 78Ni, 20Cr, 1.0Fe, 0.05C, 0.3Al, 0.5Ti, 0.6Yttrium Oxide) and MA 956((UNS S67956) Nominal Chemical Composition, wt.% 74Ni, 20Cr, 4.5Al, 0.5Ti, 0.05C, 0.5 $Y_2O_3$).

d. Seals are also fabricated using multiple-ply (layer) design to combine the application characteristics of either a, b and c above. A specific application could be a combination of a solid solution hardened alloy such as Haynes (Registered trademark) 25, and RENE 41 (this combination not being within the scope of the claims). This combination provides an enhanced resistance to stress relaxation over a greater temperature range; RENE 41 providing strength below 871°C (1600°F) and Haynes (Registered trademark) 25 above 871°C (1600°F).

Also, by using Haynes (Registered trademark) 25 on an outer ply, the need for an antigalling coating could be eliminated as the cobalt-base Haynes (Registered trademark) 25 demonstrates a superior antigalling and wear characteristics. "Base" means more than 50%, by weight, of the recited element.

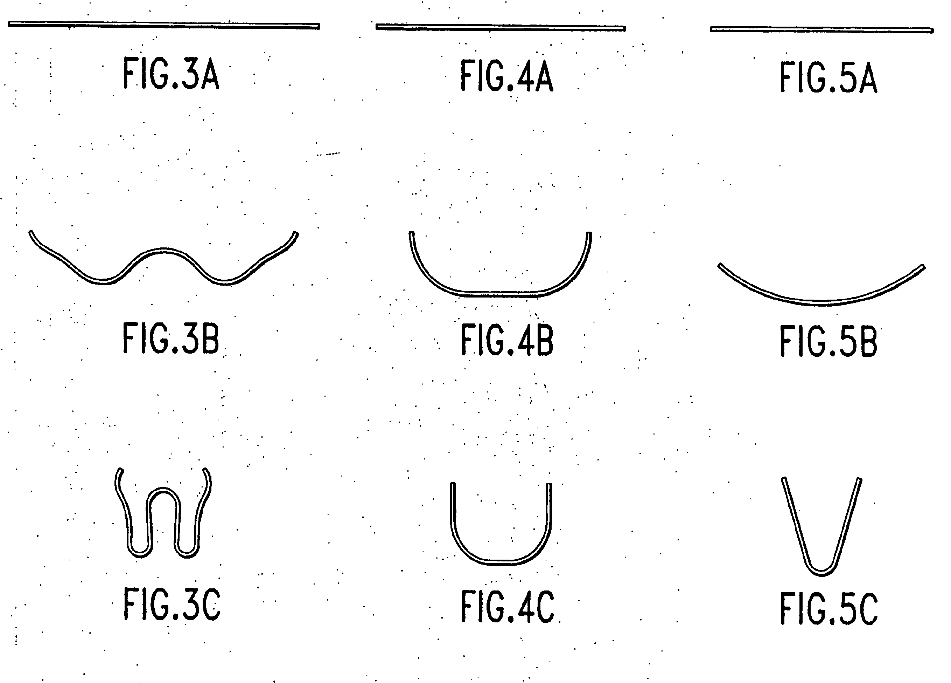

All the above alloys are easily cold formable and the strips can be joined by welding or brazing to form bands prior to roll-forming into a suitable cross-section as E, U or V (as illustrated, for example, in FIGS. 3C, 4C and 5C) generally employed for static metallic seals.

Therefore, the ease of cold formability and joining in addition to enhanced stress relaxation characteristics superior to WASPALOY (trademark) above 732°C (1350°F) are the necessary criteria for UHT seals metallic alloys.

In one embodiment, a seal manufacturing process includes:

    1. Cut material for bands to exact length and width.
    2. Weld bands to form hoops and inspect each weld.
    3. Assemble multiple plys.
    4. Form desired seal section (U, V or E) with associated tooling.
    5. Inspect each seal dimensionally.
    6. Clean and heat treat seals.
    7. Plate or coat if required.
    8. Hand polish or lap if required.
    9. Inspect each seal visually and dimensionally.
    10. Test seals, if required.
    11. Seals packed and shipped.

FIG. 2 shows a seal 20 formed as an annulus having symmetry about a central longitudinal axis 500. In operation, the seal is held in compression between opposed parallel facing surfaces 502 and 503 of first and second flanges 504 and 505 to isolate an interior volume 506 from an exterior volume 507.

The seal is formed as a convoluted sleeve having first and second layers 22 and 24 and extending from a first end 26 to a second end 28. In the exemplary embodiment, the first layer 22 is generally interior of the second layer 24 and has first and second surfaces 30 and 32, respectively. Similarly, the second layer 24 has first and second surfaces 40 and 42, respectively. In an exemplary manufacturing process, the layers 22 and 24 are initially formed as flat strips of cold formable material (i.e., it may be formed into a complex shape (e.g., having a radial section of bellows-like structure) at a temperature which is less than half its melting temperature and, preferably, at ambient conditions (e.g., room temperature)). The ends of each strip may be welded to form a sleeve, the two faces of the strip thereby becoming interior and exterior faces of the sleeve. The sleeves may be assembled concentrically and deformed into a convoluted shape such as that shown in FIG. 2.

In one embodiment the result of this process is the production of a seal (e.g., seal 20) in which the layers (e.g., layers 22 and 24) are held together by macroscopic mechanical interfitting rather than adhesion at the microscopic level between the inner surface 40 of the layer 24 and the outer surface 32 of the layer 22. There may be a gap between the layers 22 and 24 or multiple gaps between the layers 22 and 24 (where the layers contact at one or more discrete annular regions). It may be possible that there is discrete microscopic bonding (e.g., spot welds or annular welds at particular locations), and may also be no microscopic bonding at all. A major portion of the outer surface 42 of the layer 24 constitutes the external surface of the seal in contact with the volume 507. Portions 44 and 46 of the surface 42 slightly recess from the ends 26 and 28, face longitudinally outward and provide bearing surfaces for contacting the flange surfaces 502 and 503 to seal therewith. Each of the layers 22 and 24 preferably makes a substantial contribution to the longitudinal compression strength and performance of the seal 20. Preferably in an anticipated range of operation, each layer 22 and 24 contributes at least ten percent (10%) and, preferably, thirty percent (30%). As noted above, the contribution provided by each layer depends upon factors including, for example, the operating temperature.

Exemplary thermal operating conditions for the seal are in the range of about 871 - 1093°C (1600-2000°F) or even more. A more narrow target is about 927 - 1038°C (1700-1900°F). It should be appreciated that this does not necessarily mean that the seal can not be used under more conventional conditions.

FIGS. 3A-3C, 4A-4C and 5A-5C depict manufacturing stages of single ply (layer) seal designs, which employ the aforementioned metallic alloys (described in a., b. and c. above, for example, RENE 41, Haynes (registered trademark) 25, PM1000 and other ODS alloys).

Referring again to FIG. 2, the inventors have formed seals exhibiting features of the present invention (as described herein) as convoluted sleeves having: a first layer (e.g., layer 22) comprised of an ODS alloy (e.g., PM1000, PM2000, MAR M247) and a second layer (e.g., layer 24) comprised of a wear resistant alloy (Haynes (Registered trademark) 25 or Ultimet (Registered trademark) (54% Co, 26% Cr)); and a first layer comprised of an ODS alloy (e.g., PM1000, PM2000, MAR M247) and a second layer of ODS alloy (e.g., PM1000, PM2000, MAR M247).

In another embodiment of the present invention a seal is cut or split so as not to form a continuous ring. For example, a seal having an outer diameter of about 81.28 cm (32 inches) may include a "cut-out" having an arc length of about 0.254 cm (0.100 inch) such that the seal is no longer a continuous ring. Such a cut can facilitate, for example, installing the seal into certain cavities.

That is, a seal having the aforementioned cut-out can be "snaked" into a cavity that is not otherwise accessible with a solid formed ring.

One embodiment of the present invention has been described. Nevertheless, it will be understood that various modifications may be made. For example, the relaxation resistant material layer may be located in discrete locations along the length of the seal rather than continuously along the length. Such refractory material may be localized to portion of the seal where the greatest flexing occurs. Accordingly, other embodiments are within the scope of the following claims.

## Claims

1. An annular seal (20) having a longitudinal axis (500) and forming, in use, a seal between an interior volume (506) and an exterior volume (507) when held under compression between opposed first (502) and second (503) faces of respective first (504) and second (505) flanges, comprising:

   (a) a metallic first layer (22) made of an oxide dispersion strengthened alloy; and
   (b) a metallic second layer (24) made of

   - a solid solution hardened alloy,
   - or a precipitation hardened nickel-base alloy,
   - or an oxide dispersion strengthened alloy.

2. The seal of claim 1 wherein the first layer (22) is substantially an inner layer associated to the interior volume (506).

3. The seal of claim 1 or 2 wherein only the second layer (24) is in contact with the exterior volume (507).

4. The seal of any one of claims 1 to 3 having a radial section of bellows-like structure.

5. The seal of any one of claims 1 to 3 having a U, V or E radial section.

6. The seal of any one of claims 1 to 5 wherein the first layer (22) and the second layer (24) are not bonded to each other by adhesion at the microscopic level but are held together only by mechanical interfitting at the macroscopic level.

7. The seal of any one of claims 1 to 6 wherein there are one or more gaps between the first (22) and second (24) layers.

8. The seal of any one of claims 1 to 7 wherein the fist layer (22) alloy has the following nominal chemical composition in weight-%:

- 20 Cr, 3 Fe, 0.5 Ti, 0.3 Al, 0.6 $Y_2O_3$, remainder Ni; or
- 20 Cr, 5.5 Al, 0.5 Ti, 0.3 Al, 0.5 $Y_2O_3$, remainder Fe; or
- 78 Ni, 20 Cr, 1.0 Fe, 0.05 C, 0.3 Al, 0.5 Ti, 0.6 $Y_2O_3$; or
- 74 Ni, 20 Cr, 4.5 Al, 0.5 Ti, 0.05 C, 0.5 $Y_2O_3$.

9. The seal of any one of claims 1 to 8 wherein the second layer (24) precipitation hardened alloy has the following nominal composition in weight-%: 19 Co, 11 Cr, 9.75 Mo, 3.15 Ti, 3.0 Fe, 1.6 Al, 0.05 C, 0.007 B, remainder Ni plus impurities.

10. The seal of any one of claims 1 to 8 wherein the second layer (24) solid solution hardened alloy has the following nominal composition in weight-%: 20 Cr, 15 W, 10 Ni, 1.5 Mn, 0.1 C, 3 Fe max., 0.4 Si max., 51 (balance) Co plus impurities.

11. A method of manufacturing a seal (20) as set forth in any one of claims 1 to 10, comprising:

   cutting a first piece (22) of a first material to a first length and first width; cutting a second piece (24) of a second material to a second length and width; forming the first and second materials into first and second hoops; welding ends of each piece of material to each other; concentrically assembling the first and second hoops; and deforming the assembled hoops to create a convoluted cross-section.

12. The method of claim 11 wherein the assembled hoops are deformed with associated tooling into a U, V or E cross-section.

## Patentansprüche

1. Ringdichtung (20), die eine Längsachse (500) besitzt und beim Gebrauch eine Dichtung zwischen einem inneren Volumen (506) und einem äußeren Volumen (507) bildet, wenn sie zwischen der ersten Fläche (502) eines ersten Flansches (504) und der gegenüberliegenden, zweiten Fläche (503) eines zweiten Flansches (505) zusammengedrückt gehalten ist, aufweisend:

   (a) eine metallische erste Schicht (22) aus einer Oxid-dispersionsgehärteten Legierung; und
   (b) eine metallische zweite Schicht (24) aus

   - einer Mischkristall-gehärteten Legierung,
   - oder einer Ausscheidungs-gehärteten Nickelbasislegierung,
   - oder einer Oxid-dispersionsgehärteten Legierung.

**2.** Dichtung nach Anspruch 1, bei der die erste Schicht (22) im wesentlichen eine dem inneren Volumen (506) zugeordnete, innere Schicht ist.

**3.** Dichtung nach Anspruch 1 oder 2, bei der nur die zweite Schicht (24) in Kontakt mit dem äußeren Volumen (507) ist.

**4.** Dichtung nach einem der Ansprüche 1 bis 3, die im radialen Schnitt eine Balg-artige Struktur hat.

**5.** Dichtung nach einem der Ansprüche 1 bis 3, die im radialen Schnitt U-förmig, V-förmig oder E-förmig ist.

**6.** Dichtung nach einem der Ansprüche 1 bis 5, bei der die erste Schicht (22) und die zweite Schicht (24) nicht durch Adhäsion auf mikroskopischer Ebene miteinander verbunden sind, sondern durch mechanisches Zusammenpassen auf makroskopischer Ebene zusammengehalten sind.

**7.** Dichtung nach einem der Ansprüche 1 bis 6, bei der eine oder mehrere Spalten zwischen der ersten Schicht (22) und der zweiten Schicht (24) vorhanden sind.

**8.** Dichtung nach einem der Ansprüche 1 bis 7, bei der die Legierung der ersten Schicht (22) die folgende nominale chemische Zusammensetzung in Gewichts-% hat:

- 20 Cr, 3 Fe, 0,5 Ti, 0,3 Al, 0,6 $Y_2O_3$, Rest Ni; oder
- 20 Cr, 5,5 Al, 0,5 Ti, 0,3 Al, 0,5 $Y_2O_3$, Rest Fe; oder
- 78 Ni, 20 Cr, 1,0 Fe, 0,05 C, 0,3 Al, 0,5 Ti, 0,6 $Y_2O_3$; oder
- 74 Ni, 20 Cr, 4,5 Al, 0,5 Ti, 0,05 C, 0,5 $Y_2O_3$.

**9.** Dichtung nach einem der Ansprüche 1 bis 8, bei der die Ausscheidungs-gehärtete Legierung der zweiten Schicht (24) die folgende nominale Zusammensetzung in Gewichts-% hat:
19 Co, 11 Cr, 9,75 Mo, 3,15 Ti, 3,0 Fe, 1,6 Al, 0,05 C, 0,007 B, Rest Ni und Verunreinigungen.

**10.** Dichtung nach einem der Ansprüche 1 bis 8, bei der die Mischkristall-gehärtete Legierung der zweiten Schicht (24) die folgende nominale Zusammensetzung in Gewichts-% hat:
20 Cr, 15 W, 10 Ni, 1,5 Mn, 0,1 C, 3 Fe max., 0,4 Si max., 51 (Rest) Co mit Verunreinigungen.

**11.** Verfahren zur Herstellung einer Dichtung (20) gemäß einem der Ansprüche 1 bis 10, aufweisend:

Schneiden eines ersten Stücks (22) eines ersten Materials auf eine erste Länge und eine erste Breite; Schneiden eines zweiten Stücks (24) eines zweiten Materials auf eine zweite Länge und Breite; Formen des ersten Materials und des zweiten Materials zu einem ersten Ring und einem zweiten Ring; aneinander Verschweißen der Enden bei jedem Materialstück; konzentrisches Zusammensetzen des ersten Rings und des zweiten Rings; und Verformen der zusammengesetzten Ringe zur Erzeugung eines gekrümmten Querschnitts.

**12.** Verfahren nach Anspruch 11, bei dem die zusammengesetzten Ringe mit zugeordnetem Werkzeug zu einem U-förmigen, V-förmigen oder E-förmigen Querschnitt verformt werden.

**Revendications**

**1.** Joint annulaire (20) ayant un axe longitudinal (500) et formant, lors de l'utilisation, un joint entre un volume intérieur (506) et un volume extérieur (507) quand il est maintenu sous compression entre une première (502) et une seconde (503) faces opposées respectivement à une première (504) et d'une seconde (505) brides, comprenant :

(a) une première couche métallique (22) constituée d'un alliage renforcé par dispersion d'oxyde ; et
(b) une seconde couche métallique (24) constituée

- d'un alliage durci par solution solide,
- ou d'un alliage à base de nickel durci par précipitation,
- ou d'un alliage renforcé par dispersion d'oxyde.

**2.** Joint selon la revendication 1, dans lequel la première couche (22) est sensiblement une couche interne associée au volume intérieur (506).

**3.** Joint selon la revendication 1 ou 2, dans lequel seule la seconde couche (24) est en contact avec le volume extérieur (507).

**4.** Joint selon l'une quelconque des revendications 1 à 3 ayant une section radiale de structure de type soufflet.

**5.** Joint selon l'une quelconque des revendications 1 à 3 ayant une section radiale U, V ou E.

**6.** Joint selon l'une quelconque des revendications 1 à 5, dans lequel la première couche (22) et la seconde couche (24) ne sont pas liées l'une à l'autre par adhésion au niveau microscopique mais sont maintenues ensemble seulement par assemblage mécanique au niveau macroscopique.

7. Joint selon l'une quelconque des revendications 1 à 6, dans lequel il existe un ou plusieurs espaces entre la première (22) et la seconde (24) couches.

8. Joint selon l'une quelconque des revendications 1 à 7, dans lequel l'alliage de la première couche (22) a la composition chimique nominale suivante en % en poids :

    - 20 Cr, 3 Fe, 0,5 Ti, 0,3 Al, 0,6 $Y_2O_3$, le reste Ni ; ou
    - 20 Cr, 5,5 Al, 0,5 Ti, 0,3 Al, 0,5 $Y_{2O3}$, le reste Fe ; ou
    - 78 Ni, 20 Cr, 1,0 Fe, 0,05 C, 0,3 Al, 0,5 Ti, 0,6 $Y_2O_3$ ; ou
    - 74 Ni, 20 Cr, 4,5 Al, 0,5 Ti, 0,05 C, 0,5 $Y_2O_3$.

9. Joint selon l'une quelconque des revendications 1 à 8, dans lequel l'alliage durci par précipitation de la seconde couche (24) a la composition nominale suivante en % en poids :
19 Co, 11 Cr, 9,75 Mo, 3,15 Ti, 3,0 Fe, 1,6 Al, 0,05 C, 0,007 B, le reste Ni plus des impuretés.

10. Joint selon l'une quelconque des revendications 1 à 8, dans lequel l'alliage durci par solution solide de la seconde couche (24) a la composition nominale suivante en % en poids :
20 Cr, 15 W, 10 Ni, 1,5 Mn, 0,1 C, 3 Fe max, 0,4 Si max, 51 (le reste) Co plus des impuretés.

11. Procédé de fabrication d'un joint (20) tel que représenté dans l'une quelconque des revendications 1 à 10, comprenant :

    la découpe d'une première pièce (22) d'un premier matériau à une première longueur et une première largeur ;
    la découpe d'une seconde pièce (24) d'un second matériau à une seconde longueur et largeur ; la formation des premier et second matériaux en un premier et un second anneaux ; la soudure des extrémités de chaque pièce de matériau l'une à l'autre ; l'assemblage de manière concentrique des premier et second anneaux; et la déformation des anneaux assemblés pour créer une coupe transversale convolutée.

12. Procédé selon la revendication 11, dans lequel les anneaux assemblés sont déformés avec des outils associés en une coupe transversale U, V ou E.

## FIG.1

(PRIOR ART)

## FIG.2

FIG.3A

FIG.4A

FIG.5A

FIG.3B

FIG.4B

FIG.5B

FIG.3C

FIG.4C

FIG.5C

EP 1 306 589 B1